# EUROPÄISCHE PATENTSCHRIFT

(11) **EP 0 767 997 B1**
(45) Veröffentlichungstag und Bekanntmachung des Hinweises auf die Patenterteilung: **02.04.2003**
(21) Anmeldenummer: 95922409.8
(22) Anmeldetag: 22.06.1995
(51) Int. Cl.: H04M 3/50, H04Q 3/62

(54) **VERFAHREN FÜR EINE NEBENSTELLENKOMMUNIKATIONSANLAGE ZUM AKTIVIEREN EINER NACHTSCHALTUNGSKONFIGURATION**
SYSTEM FOR A PRIVATE BRANCH COMMUNICATIONS EXCHANGE TO ACTIVATE A NIGHT SWITCHING CONFIGURATION
PROCEDE PERMETTANT DE REALISER UNE INSTALLATION PRIVEE AUTOMATIQUE POUR ACTIVER UNE CONFIGURATION DE CONNEXION DE NUIT

(30) Priorität: 30.06.1994 DE 4423018
(43) Veröffentlichungstag der Anmeldung: 16.04.1997
(73) Patentinhaber: SIEMENS AKTIENGESELLSCHAFT, 80333 München (DE)
(72) Erfinder: GRANDERATH, Hartmut, D-82131 Gauting (DE)
(86) Internationale Anmeldenummer: DE9500808
(87) Internationale Veröffentlichungsnummer: WO96001016

(56) Entgegenhaltungen:
- DE-A- 3 932 689

## Beschreibung

Die Erfindung betrifft ein Verfahren für eine Nebenstellenkommunikationsanlage zum Aktivieren einer Nachtschaltungskonfiguration gemäß dem Oberbegriff des Patentanspruches 1.

In größeren Nebenstellenkommunikationsanlagen bietet sich die Möglichkeit, für eine bestimmbare Teilnehmergruppe Vermittlungsplätze einzurichten. Ein Vermittlungsplatz kann einen oder mehrere, eine Gruppe bildende Vermittlungsfernsprecher umfassen. Der Vermittlungsplatz dient dazu Anrufe - häufig sollen dies nur externe Anrufe sein - für die betreffende Teilnehmergruppe entgegenzunehmen und weiter zu vermitteln. Kann ein Vermittlungsplatz diese Aufgabe nicht erfüllen, weil beispielsweise das dem Vermittlungsplatz bedienende Personal nicht am Vermittlungsplatz anwesend ist, dann wird für die betreffende Teilnehmergruppe ein sogenannter Nachtzustand eingeschaltet. Dieses Einschalten des Nachtzustandes kann direkt am Vermittlungsplatz oder von einem dazu berechtigten Teilnehmergerät durch Drücken einer speziellen Taste oder Einwählen einer Kennzahl oder durch einen Sprachbefehl vorgenommen werden. Das Aktivieren der Nachtschaltung wird in vielen Fällen auch als "Klinke ziehen" bezeichnet.

Im Nachtzustand gelangen die auf eine bestimmte Teilnehmergruppe gerichteten Verbindungswünsche, anstelle zu dem Vermittlungsplatz, zu einem Teilnehmergerät der Nebenstellenkommunikationsanlage.

Aus der DE 39 32 689 A1 ist bereits ein Verfahren zur Aktivierung einer Nachtschaltung in einer Nebenstellenkommunikationsanlage bekannt, bei dem das Teilnehmergerät an das die Verbindungswünsche bei aktivierter Nachtschaltung umgeleitet werden, beim Aktivieren der Nachtschaltung durch Eingabe der diesem Teilnehmergerät zugehörigen Rufnummer festgelegt werden kann. Das dem bekannten Verfahren zugrundeliegende Problem besteht dabei darin, bei einer gemeinsamen Nutzung einer Nebenstellenkommunikationsanlage durch mehrere voneinander unabhängige Teilnehmergruppen sicherzustellen, daß bei der Aktivierung der Nachtschaltung für eine Teilnehmergruppe nicht ein Teilnehmergerät einer anderen Teilnehmergruppe festgelegt werden kann. Zur Lösung dieses Problems wird gemäß dem bekannten Verfahrene vorgeschlagen, in einem zentralen Speicher Informationen über die Zugehörigkeit der Teilnehmergeräte zu einem bestimmten Vermittlungsplatz abzulegen und mit Hilfe dieser Informationen bei Aktivierung der Nachtschaltung und Festlegung des den betreffenden Vermittlungsplatz gewissermaßen ersetzenden Teilnehmergerätes eine Überprüfung auf Zugehörigkeit des Teilnehmergerätes zu der Teilnehmergruppe, für die eine Nachtschaltung aktiviert werden soll, vorzunehmen.

Die Aufgabe der vorliegenden Erfindung besteht darin, ein vom Einsatzfall einer Nebenstellenkommunikationsanlage unabhängiges und hinsichtlich Kundenwünschen universell verwendbares Verfahren zur Erstellung von Nachtschaltungskonfigurationen anzugeben, dessen Implementierung mit möglichst wenig Eingriffen in bestehende Strukturen der Nebenstellenkommunikationsanlage vorgenommen werden kann.

Gelöst wird diese Aufgabe erfindungsgemäß durch die im kennzeichnenden Teil des Patentanspruchs 1 angegebenen Merkmale.

Das erfindungsgemäße Verfahren wird im wesentlichen von einer Konfigurationssteuerung ausgeführt, die als Teil einer zentralen Steuerung der Nebenstellenkommunikationsanlage angesehen werden kann. Diese Konfigurationssteuerung wird wie bei einer herkömmlichen Leistungsmerkmalsaktivierung durch einen Benutzer angesprochen und erstellt im Zuge weiterer Eingaben durch den Benutzer einen oder mehrere betriebstechnische Aufträge, die an die Betriebstechnikkomponente der Nebenstellenkommunikationsanlage weitergeleitet werden.

Ein wesentlicher Vorteil des erfindungsgemäßen Verfahrens besteht in dem prinzipiell verfügbaren großen Freiheitsgrad für die Bildung einer Nachtschaltungskonfiguration. Lediglich durch die Berechtigungskennung sind vom Betreiber der Anlage gewollte Beschränkungen einstellbar. Prinzipiell kann im Nachtschaltungszustand jede Teilnehmergruppe zu jedem beliebigen Teilnehmergerät oder Vermittlungsplatz umgeleitet werden. Mehrere Teilnehmergruppen können dabei gleichzeitig auf dasselbe Teilnehnergerät bzw. denselben Vermittlungsplatz geschaltet werden.

Insbesondere bei einer Vernetzung von Nebenstellenkommunikationsanlagen, in denen jeweils das erfindungsgemäßes Verfahren implementiert ist, können die auf eine Teilnehmergruppe einer ersten Anlage gerichteten Verbindungswünsche zu einem Teilnehmergerät bzw. einem Vermittlungsplatz einer zweiten Anlage umgelenkt werden. Auch ist es möglich, an einem Teilnehmergerät oder einem Vermittlungsplatz einer ersten Anlage eine Nachtschaltungskonfiguration in einer zweiten Anlage zu aktivieren und einzustellen.

Ein weiterer, besonders wesentlicher Vorteil des erfindungsgemäßen Verfahrens besteht darin, daß die Einstellung einer Nachtschaltungskonfiguration durch eine in der Nebenstellenkommunikationsanlage reservierte Rufnummer aktiviert werden kann, so daß auch über eine externe Leitung (z.B. über eine Amtsleitung) eine Nachtschaltungskonfiguration in der Nebenstellenkommunikationsanlage eingestellt werden kann. Vorteilhafte Weiterbildungen der Erfindung sind in den ünteransprüchen angegeben.

Eine Protokollierung der im Zuge einer Aktivierung einer Nachtschaltungskonfiguration an einem Teilnehmergerät oder einem Vermittlungsplatz eingegebenen Informationen dient zur Aufdeckung von Mißbrauchsversuchen und zur nachträglichen Klärung von bedienerseitig fehlerhaft vorgenommenen Einstellungen.

Ein Ausführungsbeispiel der Erfindung wird im folgenden anhand der Zeichnung näher erläutert.

Dabei zeigen
- Figur 1: zwei miteinander verbundene Nebenstellenkommunikationsanlagen jeweils in schematischer Darstellung,
- Figur 2: eine grafische Veranschaulichung der wesentlichen Verfahrensschritte.

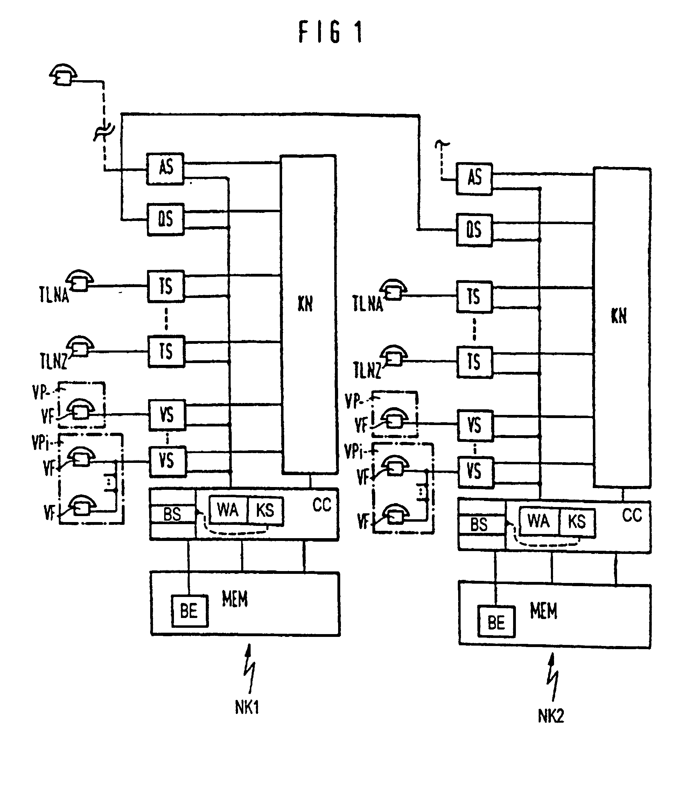

In Figur 1 sind schematisch zwei miteinander verbundene Nebenstellenkommunikationsanlagen NK1, NK2 dargestellt, die sich jeweils aus einer zentralen Steuerung CC, einem zentralen Speicher MEM, einem Koppelnetz KN, mehreren Amtssätzen AS, mehreren Quersätzen QS, über die die beiden Nebenstellenkommunikationsanlagen NK1,NK2 verbunden sind, mehreren Teilnehmersätzen TS und daran angeschlossenen Teilnehmergeräten TLNn, mehreren Vermittlungssätzen VS mit daran angeschlossenen Vermittlungsfernsprechern VF, die einzeln oder in Gruppen zusammengefaßt jeweils einen Vermittlungsplatz VP bilden, zusammensetzt.

Die zentrale Steuerung CC weist eine Betriebstechnikkomponente BS auf, die mit betriebstechnischen Aufträgen, sogenannten AMO's (administration maintenance order), eine weitestgehend dynamische Strukturierung der Nebenstellenkommunikationsanlage erlaubt. Hierzu wird insbesondere auf die 'Sonderausgabe telcom report und Siemens-Magazin COM', "ISDN im Büro", Siemens AG, 1985, Seiten 101 bis 106 verwiesen, in der die Funktion und die Aufgabe der Betriebstechnikkomponente einer Nebenstellenkommunikationsanlage näher beschrieben werden.

Die zentrale Steuerung CC weist weiterhin eine Wahlbewertungseinrichtung WA und eine Konfigurationssteuerung KS auf, die durch Rufnummernwahl aktivierbar ist.

Im zentralen Speicher MEM ist ein Berechtigungsverzeichnis BE hinterlegt, in dem die einzelnen Berechtigungen und Daten über deren Berechtigungsumfang gespeichert sind.

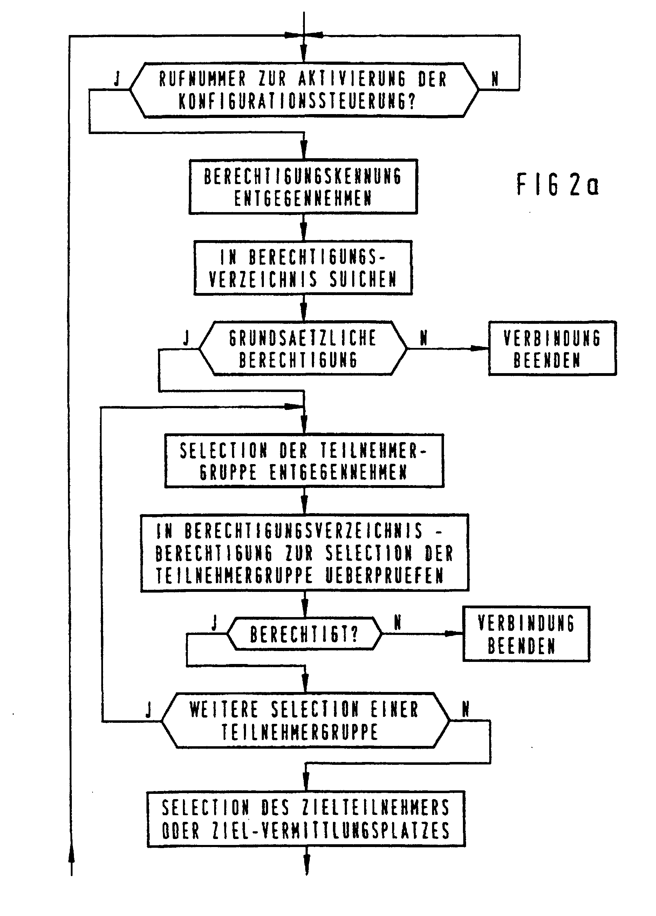

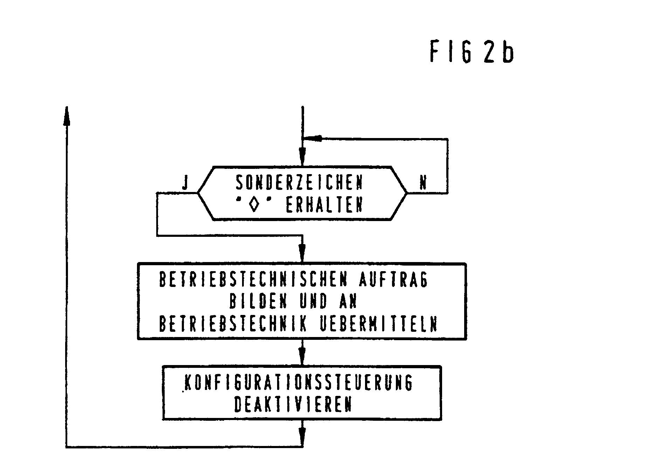

In Figur 2 sind die wesentlichen verfahrenstechnischen Schritte des erfindungsgemäßen Verfahrens in Form eines Ablaufdiagramms grafisch dargestellt. Von einem beliebigen Teilnehmergerät TLNA oder von einem Vermittungsplatz VP aus wird eine Rufnummer zur Aktivierung der Nachtschaltung eingegeben. In der Wahlbewertungseinrichtung WA der zentralen Steuerung CC wird daraufhin die Konfigurationssteuerung KS aktiviert. Eine im weiteren vom Bediener des betreffenden Teilnehmergerätes TLNA oder Vermittlungsplatzes VP eingegebene Ziffernfolge wird von der Konfigurationssteuerung KS als Berechtigungskennung entgegengenommen. Diese Berechtigungskennung wird im Berechtigungsverzeichnis BE gesucht. Um einen Mißbrauch zu verhindern, kann vorgesehen sein, daß nach mehrmaligen Eingabeversuchen von Berechtigungskennungen, die nicht im Berechtigungsverzeichnis BE gefunden werden können, das Teilnehmergerät TLNA bzw. der Vermittlungsplatz VP, von dem aus die Nachtschaltung aktiviert werden soll, gesperrt wird.

Wird jedoch die eingegebene Berechtigungskennung im Berechtigungsverzeichnis BE gefunden, so wird eine im weiteren von der Bedienerperson eingegebene Ziffernfolge zur Selektion einer Teilnehmergruppe interpretiert und entgegengenommen. Für den Fall, daß keine derartige Ziffernfolge von der Bedienerperson eingegeben wird, wird üblicherweise die Nachtschaltung in einer voreingestellten Konfiguration aktiviert. Wird jedoch von der betreffenden Bedienerperson eine Ziffernfolge zur Selektion einer Teilnehmergruppe eingegeben, wird im Berechtigungsverzeichnis BE unter der zuvor eingegebenen Berechtigungskennung auf eine Information dahingehend gesucht, ob unter der Berechtigungskennung die betreffende Teilnehmergruppe selektiert werden darf. Ist bei dieser Überprüfung festgestellt worden, daß eine Berechtigung dazu vorliegt, können von der Bedienerperson weitere Ziffernfolgen zur Selektion weiterer Teilnehmergruppen eingegeben werden, wobei jeweils eine Überprüfung auf Berechtigung vorgenommen wird.

Ist eine Selektion der Teilnehmergruppen abgeschlossen, wird eine im weiteren von der Bedienerperson eingegebene Ziffernfolge zur Selektion des Zielteilnehmergerätes bzw. des Zielvermittlungsplatzes gewertet, an den die auf die selektierten Teilnehmergruppen gerichteten Verbindungswünsche bei aktivierter Nachtschaltung durchgestellt werden sollen. Bei dieser Auswahl kann eine Bedienerführung vorgenommen werden in der Weise, daß dem Bediener auf dem 'Display' seines Endgerätes eine Anzahl von Zielteilnehmergeräten bzw. Zielvermittlungsplätzen z.B. in Form zugehöriger Rufnummern, zur Auswahl angeboten werden. In den Fällen, in denen keines der angebotenen Ziele vom Bediener bestätigt wird, wird eine Eingabe zur beliebigen Auswahl eines Zielteilnehmergerät bzw. eines Zielvermittlungsplatz erwartet. Auch bei der Selektion des Zielteilnehmergerätes bzw. des Zielvermittlungsplatzes kann eine Überprüfung der Berechtigung vorgenommen werden.

Mit Eingabe eines Sonderzeichens, z.B. einer Raute durch die Bedienerperson wird die gesamte Eingabesequenz beendet und von der Konfigurationssteuerung KS wird ein betriebstechnischer Auftrag gebildet, der entsprechend der von der Bedienerperson vorgenommenen Selektion der Teilnehmergruppen und der Selektion des Zielteilnehmergerätes bzw. des Zielvermittlungsplatzes Verbindungswege erstellt wird. Nach Übermittlung dieses betriebstechnischen Auftrages an die Betriebstechnikkomponente BS der Nebenstellenkommunikationsanlage wird der betriebstechnische Auftrag ausgeführt und die beabsichtigten Verbindungen eingerichtet.

Eine Deaktivierung der Nachtschaltung wird in analoger Weise wieder durch Wahl einer Rufnummer realisiert, die ihrerseits wieder die Konfigurationssteuerung KS aktiviert und nach Berechtigungsüberprüfung einen betriebstechnischen Auftrag bildet, der den bei Aktivierung der Nachtschaltung an die Betriebstechnik übermittelten betriebstechnischen Auftrag gewissermaßen rückgängig macht.

## Patentansprüche

1. Verfahren für eine Nebenstellenkommunikationsanlage (NK) zum Aktivieren einer Nachtschaltungskonfiguration, bei der die für eine jeweilige Teilnehmergruppe eintreffenden Anrufe unter Außerbetriebnahme eines dieser Teilnehmergruppe zur Rufannahme und Weiterleitung zugeordneten Vermittlungsplatzes (VP) an Teilnehmergeräte (TLN) oder andere Vermittlungsplätze durchgestellt werden, **dadurch gekennzeichnet, daß** von einem internen oder externen Teilnehmergerät oder von einem Vermittlungsplatz (VP) durch Rufnumaernwahl eine Konfigurationssteuerung (KS) aktiviert wird, daß von der Konfigurationssteuerung (KS) eine im weiteren eingegebene Ziffernfolge als Berechtigungskennung bewertet wird und mit gespeicherten Ziffernfolgen zur Überprüfung einer zumindest grundsätzlichen Zugriffsberechtigung verglichen wird, daß bei positivem Vergleichsergebnis mittels einer nachfolgend eingegebenen Ziffernfolge eine Teilnehmergruppe selektiert wird, wobei von der Konfigurationssteuerung (KS) die eingegebene Berechtigungskennung hinsichtlich einer Berechtigung zur Selektion dieser Teilnehmergruppe überprüft wird und daß bei erkannter Berechtigung mittels einer im weiteren eingegebenen Ziffernfolge das Teilnehmergeräte oder der Vermittlungsplatz identifiziert wird, das bzw. der zur Entgegennahme von an die selektierte Teilnehmergruppe gerichteten Anrufen vorgesehen ist und daß von der Konfigurationssteuerung (KS) daraufhin eine entsprechende betriebstechnische Anweisung gebildet und an die Betriebstechnik (BS) der Nebenstellenkommunikationsanlage (NK) übermittelt wird.

2. Verfahren nach Anspruch 1, **dadurch gekennzeichnet, daß** bei Aktivierung der Konfigurationssteuerung (KS) eine elektronische Protokollierung aktiviert wird.

3. Verfahren nach Anspruch 1 oder 2, **dadurch gekennzeichnet, daß** erst nach Eingabe eines Sonderzeichens der betriebstechnische Auftrag an die Betriebstechnik (BS)übermittelt wird.

## Claims

1. Method for a private branch communications exchange (NK) to activate a night service configuration, in which, while a switchboard position (VP) assigned to a respective subscriber group for receiving and passing on calls is taken out of operation, incoming calls for said subscriber group are put through to handsets (TLN) or other switchboard positions, **characterized in that** a configuration control (KS) is activated by dialling a call number from an internal or external handset or a switchboard position (VP), **in that** a number sequence then entered is interpreted by the configuration control (KS) as an authorization code and is compared with stored number sequences for checking an authorization to access at least in principle, **in that**, if the result of the comparison is positive, a subscriber group is selected by means of a subsequently entered number sequence, the entered authorization code being checked by the configuration control (KS) with regard to an authorization for the selection of this subscriber group and **in that**, if authorization is recognized, the handset or the switchboard position which is intended for taking calls directed to the selected subscriber group is identified by means of a number sequence then entered and **in that** a corresponding administration and maintenance order is then formed by the configuration control (KS) and transmitted to the operating system (BS) of the private branch communications exchange (NK).

2. Method according to Claim 1, **characterized in that**, when the configuration control (KS) is activated, an electronic logging is activated.

3. Method according to Claim 1 or 2, **characterized in that** the administration and maintenance order is only transmitted to the operating system (BS) after a special symbol has been entered.

## Revendications

1. Procédé destiné à une installation de communication à postes supplémentaires (NK), permettant d'activer une configuration de renvoi de nuit, dans laquelle les appels arrivant pour un groupe d'abonnés sont commutés, en mettant hors service une position d'opérateurs (VP) affectée à ce groupe d'abonnés pour recevoir et commuter les appels, sur des appareils d'abonnés (TLN) ou d'autres positions d'opérateurs, **caractérisé par le fait qu'**on active par sélection d'un numéro d'appel, à partir d'un appareil d'abonné interne ou externe ou d'une position d'opérateurs (VP), une commande de configuration (KS), que la commande de configuration (KS) évalue une séquence de chiffres saisie ensuite en tant qu'indicatif de catégorie d'accès et qu'elle la compare à des séquences de chiffres mémorisées en vue de vérifier au moins une autorisation d'accès fondamentale, que, dans le cas où le résultat de cette comparaison est positif, un groupe d'abonnés est sélectionné au moyen d'une séquence de chiffres saisie ensuite, la commande de configuration (KS) vérifiant l'indicatif de catégorie d'accès saisi quant à son autorisation à sélectionner ce groupe d'abonnés, et que, si cette autorisation est reconnue, on identifie, au moyen d'une séquence de chiffres saisie ensuite, l'appareil d'abonné ou la position d'opérateurs qui est prévu(e) pour recevoir des appels orientés vers ce groupe d'abonnés sélectionné et que, après quoi, la commande de configuration (KS) forme une instruction correspondante d'exploitation et la transmet à l'exploitation (BS) de l'installation de communication à postes supplémentaires (NK).

2. Procédé selon la revendication 1 **caractérisé par le fait que**, lorsque la commande de configuration (KS) est activée, l'établissement électronique d'un protocole est activé.

3. Procédé selon la revendication 1 ou 2 **caractérisé par le fait que** l'instruction d'exploitation n'est transmise à l'exploitation (BS) qu'après la saisie d'un caractère spécial.
